Europäisches Patentamt

European Patent Office

Office européen des brevets

(11) Veröffentlichungsnummer: **0 293 868 B1**

# (12) EUROPÄISCHE PATENTSCHRIFT

(45) Veröffentlichungstag der Patentschrift: **06.05.92**

(21) Anmeldenummer: **88108795.1**

(22) Anmeldetag: **01.06.88**

(51) Int. Cl.⁵: **F16D  65/12**

54 **Wellenbremsscheibe für Scheibenbremsen von Schienenfahrzeugen.**

(30) Priorität: **04.06.87 DE 3718770**

(43) Veröffentlichungstag der Anmeldung:
**07.12.88 Patentblatt  88/49**

(45) Bekanntmachung des Hinweises auf die
Patenterteilung:
**06.05.92 Patentblatt  92/19**

(84) Benannte Vertragsstaaten:
**CH DE FR GB IT LI**

56 Entgegenhaltungen:
**EP-A- 0 065 312          EP-A- 0 127 932
EP-A- 0 235 382          DE-A- 1 575 749
DE-A- 1 914 409          DE-A- 2 505 205
DE-A- 2 513 914          DE-A- 2 828 109
DE-A- 3 201 107          US-A- 3 391 763**

(73) Patentinhaber: **KNORR-BREMSE AG
Moosacher Strasse 80 Postfach 401060
W-8000 München 40(DE)**

(72) Erfinder: **Gebhardt, Hannes
Auweg 43
W-8046 Garching(DE)**
Erfinder: **Schörwerth, Mathias
Lilienstrasse 3
W-8102 Geretsried(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Wellenbremsscheibe nach dem Gattungsbegriff des Patentanspruches 1.

Es sind Bremsscheibenkonstruktionen bekannt (DE-A-25 05 205; US-A-3,391,763), bei welchen der radial innere Abschnitt, der Tragabschnitt, durch Stege oder Speichen voneinander getrennte Schlitze aufweist. Der Tragabschnitt derartiger Bremsscheiben liegt im kalten Zustand am Außenumfang eines Nabenkörpers an, welcher seinerseits am Außenumfang der abzubremsenden Welle aufgeschrumpft oder auf sonstige Weise mit dieser verbunden ist. Zu beiden Seiten des Tragabschnittes sind Klemmabschnitte oder Klemmringe vorgesehen, welche teilweise vom Nabenkörper selbst, teilweise von gesonderten Klemmringsegmenten etc. gebildet sein können. Schrauben durchsetzen entweder die Schlitze oder die zwischen den Schlitzen befindlichen Speichen als auch die Klemmabschnitte zu beiden Seiten des Tragabschnittes, so daß der die Bremsscheibe bildende Ringkörper zwischen den Klemmringen oder Klemmabschnitten verspannbar ist. Bei Erwärmung vollzieht sich an dem Ringkörper eine radiale, im allgemeinen ungerichtete Dehnung, welche zu einer unzentrischen Gesamtlage der Bremsscheibe führen kann. Hierbei hebt sich die Zentrierung des Ringkörpers vom Nabensitz ab, vorzugsweise infolge der eingehenden axialen Stöße, wodurch die für das ruhige Rotieren der Achsen schädliche Unwucht entsteht.

Davon ausgehend besteht die Aufgabe der Erfindung darin, eine Wellenbremsscheibe der gattungsgemäßen Art so auszugestalten, daß eine Zentrierung der Wärmedehnungsbewegungen stattfinden kann, d.h. es soll eine einseitige Unwucht im Verlaufe der Wärmedehnung vermieden werden. Im besonderen soll erreicht werden, daß der die Bremsscheibe bildende Ringkörper bei Abkühlung wieder den ursprünglich bestehenden, vollkommen zentrischen Zustand erreicht und daß keine Unwucht verbleibt. Dies soll mit einfachen baulichen Mitteln erreicht werden.

Zur Lösung dieser Aufgabe dienen die Merkmale nach dem Kennzeichnungsteil des Patentanspruches 1.

Den zu beiden Seiten des Ringkörpers an axialen Fortsätzen desselben ausgebildeten Ringschultern stehen am Nabenkörper bzw. an Klemmringabschnitten oder dgl. Spannelementen ausgebildeten Ringschultern unter einem vorbestimmten radialen Spiel gegenüber, welches durch die bei maximaler Betriebstemperatur des Ringkörpers entstehende Wärmedehnung, bezogen auf den gesamten Umfang, bestimmt ist. Ein einseitiges, Unwucht erzeugendes Auswandern des Ringkörpers wird hierdurch vermieden, d.h. exakte Zentrierung des Ringkörpers liegt im kühlen Zustand, aber auch bei Erreichen der maximalen Betriebstemperatur vor, dann nämlich, wenn sich am gesamten Umfang die beidseitigen Ringschultern des Ringkörpers an die zugewandten radial innenseitig ausgerichteten Ringschultern von Nabenkörper bzw. Klemmring angelegt haben.

Eine vorteilhafte Ausgestaltung nach der Erfindung sieht vor, daß die Zentrierung gerichtet verläuft, wobei im Bereich des Tragabschnittes des Ringkörpers eingefügte, am Nabenkörper ortsfest gehaltene Blattfedern die radialen Dehnungsbewegungen richten, so daß, bezogen auf den gesamten Umfang, eine von vornherein gleichförmige Wärmedehnung entsprechend dem verfügbaren Spiel stattfindet.

Vorteilhafte Ausgestaltungen und Weiterbildungen sind in den weiteren Patentansprüchen aufgeführt.

Die Erfindung ist nachfolgend anhand von Ausführungsbeispielen unter Bezugnahme auf die beigefügte Zeichnung erläutert.

Fig.1    gibt in Achsialschnittansicht eine erfindungsgemäß zentrierte Wellenbremsscheibenhälfte auf einer Hohlwelle wieder;

Fig.2    ist eine der Fig.1 vergleichbare Schnittansicht von Linie II-II in Fig.3; und

Fig.3    ist eine Teildraufsicht auf die erfindungsgemäße Wellenbremsscheibe nach Fig.2.

In der Zeichnung ist eine abzubremsende Welle 1 dargestellt, an deren Außenumfang ein Nabenkörper 3 aufgeschrumpft oder auf sonstige Weise befestigt ist. Der Nabenkörper 3 trägt die Bremsscheibe in Form eines Ringkörpers 5, welcher mittels am Umfang unter gegenseitigem Winkelabstand angeordneter Schrauben 7 mit dem Nabenkörper 3 verschraubt ist. Im dargestellten Ausführungsbeispiel durchsetzen die Schrauben 7 Ausnehmungen bzw. Schlitze 9, welche jeweils zwischen (nicht dargestellten) Speichen des Nabenkörpers ausgebildet sind. Durch die Verschraubung zwischen Nabenkörper und Ringkörper wird dieser unter Reibschluß an den zugewandten Innenflächen des Nabenkörpers festgehalten, wobei davon auszugehen ist, daß der rechtsseitig wiedergegebene Spannring 11 als Bestandteil des Nabenkörpers 3 wirkt.

Der Nabenkörper 3 ist beidseitig des Ringkörpers 5, also auch im Bereich des Spannringes 11, je mit einem Ringflansch 13 versehen, welcher mit einer ringförmigen Eindrehung ausgestattet ist. Hierdurch sind Ringschultern 17 gebildet, welchen auf axialen Abschnitten 21 des Ringkörpers 5 ausgebildete Ringschultern 23 gegenüberstehen.

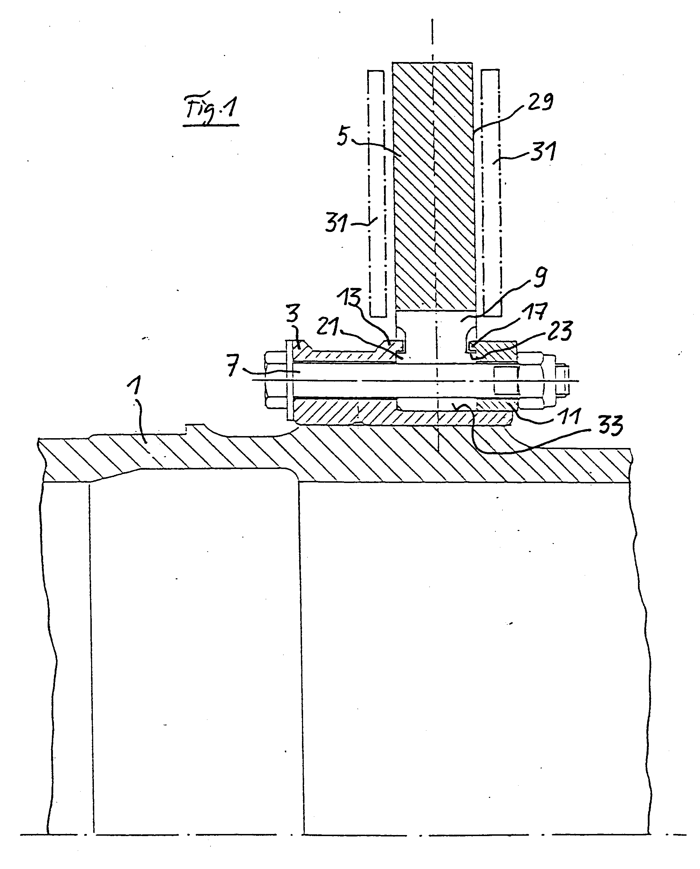

Die Ringschultern 17 stehen im kühlen Zustand der Bremsscheibe den Ringschultern 23 mit einem geringen Radialabstand gegenüber. Während Bremsungen heizen die an die Reibringflächen 29 angepreßten, in Fig.1 strichpunktiert angedeuteten Bemsbacken 31 jeweils den radial außenseitig liegenden Reibabschnitt einschließlich des radial inneren, von den Schlitzen 9 durchsetzten Tragabschnittes auf hohe Temperaturen auf. Infolge der Wärmezufuhr hebt sich der Ringkörper 5 von seinem Sitz 33 am Nabenkörper 3 ab, insbesondere infolge der im Betrieb auftretenden axialen Stöße, bis sich die Ringschultern 17 an die Ringschultern 23 anlegen. Eine unbegrenzte, unzentrische Ausdehnung des Ringkörpers 5 ist hierdurch vermeidbar, wobei das Spiel zwischen den zentrierenden Ringschultern so gewählt ist, daß es bei der maximal zugelassenen Reibscheibentemperatur von z.B. 360° Celsius voll aufgezehrt ist. In diesem Zustand liegen die Ringschultern 17 bzw. 23 von Nabenkörper und Ringkörper auf dem gesamten Zentrierumfang aneinander an. Dies bedeutet, daß die Reibscheibe im kalten sowie im Zustand der maximal zugelassenen Erwärmung perfekt zentriert ist; zwischen diesen Temperaturen ist sie nur teilzentriert, wobei jeweils eine Unsymmetrie zwischen den einzelen Positionen am Umfang der Reibscheibe auftreten kann.

Die Erfindung ist nicht auf das vorbeschriebene Ausführungsbeispiel beschränkt, d.h. bei dem Ringkörper 5 kann es sich auch um eine belüftete Scheibe handeln, bei welcher zwischen den Reibringflächen Belüftungskanäle, unterbrochen durch Stege, vorgesehen sind. In gleicher Weise ist es auch möglich, daß die Schrauben 7 im Bereich von Tragringabschnitten bzw. Speichen durch den Ringkörper hindurchgeführt sind. Die im Ringkörper jeweils die Schraube aufnehmende Bohrung ist hierbei mit einem ausreichend großen Durchmesser versehen, so daß sich der Nabenkörper nicht an die Innenwand der Bohrung anlegen kann, d.h. es werden sogenannte Durchgangsschrauben mit ausreichendem Spiel verwendet.

Vorstehend wurde ein Nabenkörper 3 in Verbindung mit einem Spannring 11 erläutert. Der Nabenkörper ist bei dieser Ausführungsform auf die Welle 1 aufgeschrumpft. Die Welle kann, wie dargestellt, als Hohlwelle ausgebildet sein, sie kann jedoch auch als Vollwelle bestehen. Der Nabenkörper 3 kann Mittel aufweisen, welche ihn absolut verdrehsicher gegenüber der Welle halten. Hierfür sind in bekannter Weise Keilkörper vorgesehen.

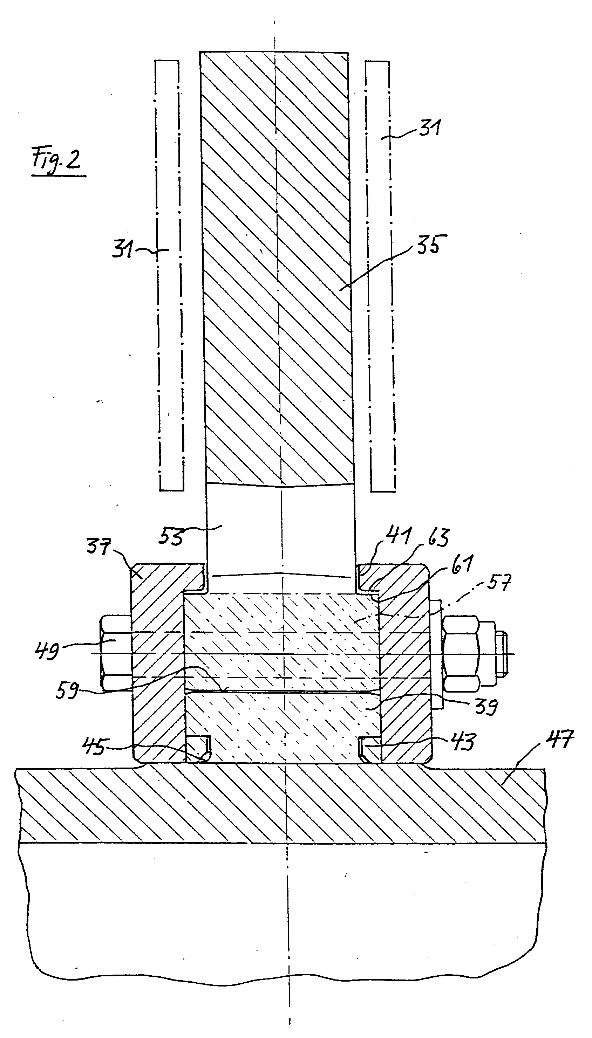

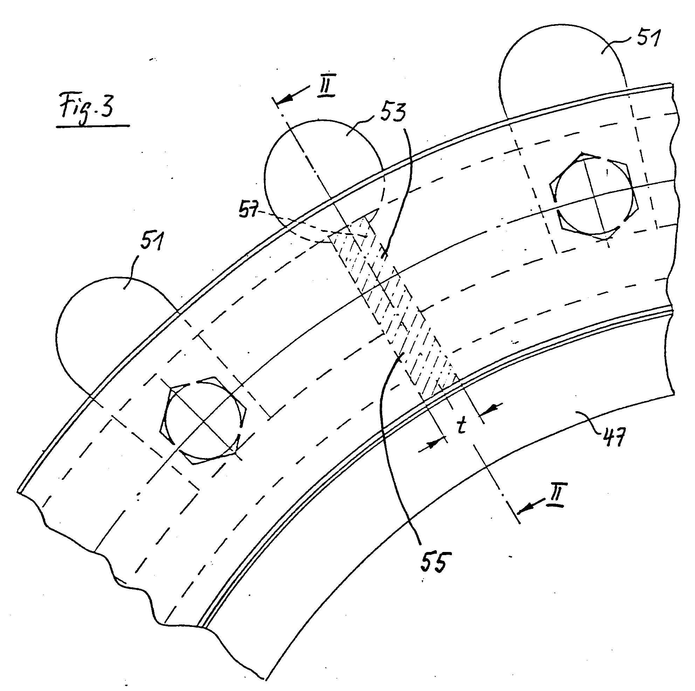

Bei der in Fig.2 und 3 dargestellten Ausführungsform nach der Erfindung ist ein als Reibscheibe ausgebildeter Ringkörper 35 mit Hilfe von Spannringen 37 am Nabenkörper 39 befestigt. Die Spannringe sind geteilt, d.h. daß pro Seite des Ringkörpers 35 drei Spannringsegmente vorgesehen sind. Die Spannringe 37 besitzen jeweils einen übergreifenden Außenbund 41 und einen Innenbund 43, welcher nach der Darstellung gemäß Fig.2 eine Nut 45 des Nabenkörpers 39 hintergreift. Der Nabenkörper 39 ist wie beim vorstehend beschriebenen Ausführungsbeispiel vorzugsweise auf die Welle 47 aufgeschrumpft. Gemäß Darstellung durchsetzen Schrauben 49 Schlitze 51 im Tragabschnitt des Ringkörpers 35, wobei pro Spannringsegment vier derartige Schrauben vorgesehen sein können. Im Bereich eines in Fig.3 dargestellten, an seiner Basis schmaleren Schlitzes 53 sind Mittel vorgesehen, welche eine gerichtete Zentrierung der Reibscheibe bei Erwärmung übernehmen. Im Bereich der Schnittdarstellung nach Fig.2 sind sowohl der Innenbund 43 der Spannringe 37 als auch der Nabenkörper 39 auf einer Breite t durchtrennt; dies bedeutet, daß der in seiner Basis verengte Schlitz 53 unmittelbar in einen Schlitz 55 im Bereich des Nabenkörpers bzw. der beiden hintergreifenden Innenbundkörper übergeht. In diesem Schlitz 55 ist eine in Fig. 2 und 3 strichpunktiert angedeutete Blattfeder 57 eingelegt. Die Blattfeder ist demnach ortsfest innerhalb des Schlitzes 55 des Nabenkörpers 39 gehalten und arretiert ihrerseits infolge Überlappung des Innenbundes 43 zu beiden Seiten die Spannringe 37. Somit ist in Umfangsrichtung die Relativlage der beiden Spannringe 37 bezüglich des Nabenkörpers 39 festgelegt. Da sich die Blattfeder 57 außerdem in die verengte Basis des Schlitzes 53 erstreckt, ist auch die Position des Ringkörpers 35 in Relation zum Nabenkörper und zu den Spannringen 37 festgelegt, d.h. ein Verschieben in Umfangsrichtung ist nicht möglich. Der Ringkörper 35, der im kalten Zustand gemäß Fig.2 auf dem Sitz 59 des Nabenkörpers aufliegt, ist bei Erwärmung hinsichtlich der Wärmebewegungen zentriert, mit anderen Worten, durch die Position der Blattfedern 57 in radialer Richtung vorgegeben. Es vollzieht sich bei Erwärmung des Ringkörpers 35 eine gerichtete Dehnung in radialer Richtung, wobei sowohl am Tragteil des Ringkörpers 35 als auch an dem jeweiligen Außenbund 41 der Spannringe 37 der Ausführungsform nach Fig.1 vergleichbare Ringschultern 61 und 63 vorgesehen sind. Dieser Abstand steht dem Ringkörper 35 für seine gerichtete Wärmedehnung zur Verfügung. Das sogenannte "Atmen" des Ringkörpers infolge der Erwärmung erfolgt unter Überwindung des Reibschlusses, welcher am Innenumfang axial zwischen den Spannringen 37 und dem Tragteil des Ringkörpers besteht. Wie erwähnt, dienen die Blattfedern 57 dazu, die erwärmte Reibscheibe zentrisch zu halten und das Verdrehen der Reibscheibe, d.h. des Ringkörpers relativ zum Nabenkörper zu verhindern. Im dargestellten Ausführungsbeispiel sind hierzu drei Blattfedern 57 vorgesehen, also pro Spannringsegment jeweils eine Blattfeder. Die Anzahl dieser Blattfederanordnungen kann auch größer sein und hierbei den jeweiligen Erfordernissen des Temperaturverhaltens angepaßt sein. Mit Hilfe dieser Anordnung ist ein gerichtetes, d.h. zentriertes "Atmen" der Reibscheibe ermöglicht, so daß das Entstehen von Unwucht weitgehend ausgeschaltet bleibt.

**Patentansprüche**

1. Wellenbremsscheibe für Scheibenbremsen von Schienenfahrzeugen, mit einem als lüftkanalfreie Vollscheibe ausgebildeten oder Lüftungskanäle aufweisenden Ringkörper (5;35), welcher zwei von Bremsbacken (31) zu beiden Seiten beaufschlagbare Reibflächen (29) trägt und der mittels achsparalleler Schrauben (7;49) mit einem Nabenkörper (3,11;39,37) einer Welle (1;47) verschraubt ist, wobei sich die Schrauben (7;49) entweder frei durch vom Innenumfang des Ringkörpers (5;35) ausgehende, radiale Schlitze (9;51) oder in Form von Durchgangsschrauben durch Tragringabschnitte bzw. durch Speichen zwischen den Schlitzen des Ringkörpers erstrecken, dadurch gekennzeichnet, daß der Ringkörper (5;35) jeweils im Bereich der zwischen den Schlitzen (9;51) liegenden Speichen beidseitig an achsialen Abschnitten (21) ausgebildete Ringschultern (23;61) aufweist, welchen zu beiden Seiten des Ringkörpers radial außerhalb Ringschultern (17;63) des Nabenkörpers (3,11;39,37) unter Abstand gegenüberstehen, und daß der Innenumfang des Ringkörpers (5;35) auf einem Sitz (33;59) des Nabenkörpers (3,11;39,37) aufliegt, derart, daß im kalten Zustand des Ringkörpers (5;35) zwischen den Ringschultern (23,17;61,63) ein bei Aufheizen des Ringkörpers (5;35) durch Wärmedehnung aufzehrbarer radialer Abstand besteht und sich der Innenumfang des Ringkörpers (5;35) bei Wärmedehnung mit radialem Abstand vom Sitz (33;59) abhebt.

2. Wellenbremsscheibe nach Anspruch 1, dadurch gekennzeichnet, daß eines der den Ringkörper (5) begrenzenden Seitenteile des Nabenkörpers (3,11) durch einen Spannring (11) gebildet ist.

3. Wellenbremsscheibe nach Anspruch 1, dadurch gekennzeichnet, daß die beiden den Ringkörper (35) begrenzenden Seitenteile des Nabenkörpers (39,37) aus am Nabenkörper formschlüssig gehaltenen Spannringen (37) bestehen.

4. Wellenbremsscheibe nach Anspruch 3, dadurch gekennzeichnet, daß die zu beiden Seiten des Ringkörpers (35) an diesem unter Verspannung der Schrauben (49) anliegenden Spannringe (37) an ihrem Innenumfang je einen achsial nach innen gerichteten Innenbund (43) aufweisen, welcher eine Nut (45) im zugewandten Nabenkörper (39) hintergreift.

5. Wellenbremsscheibe nach einem der vorangehenden Ansprüche, gekennzeichnet durch folgende Merkmale:
   a) am Innenumfang (Tragabschnitt) des Ringkörpers (35) sind diesen in Axialrichtung durchsetzende Schlitze (53) vorgesehen;
   b) in radialer Fluchtung zu diesen Schlitzen verlaufen Schlitze (55) durch den radial innerhalb des Ringkörpers (35) befindlichen Nabenköper (39);
   c) die zu beiden Seiten des Ringkörpers (35) und des Nabenkörpers (39) an diesen durch die Schrauben verspannbaren Spannringe (37) sind im Bereich ihres nach innen gerichteten Innenbundes (43) gleichfalls jeweils mit einem Schlitz versehen, welcher sich in Fluchtung mit den Schlitzen (53;55) des Nabenköpers und des Ringkörpers befindet; und
   d) in den Schlitz-Freiraum des Nabenkörpers und des Ringkörpers ist jeweils eine bis an den Innenumfang der Spannringe radial sich erstreckende Blattfeder (57) eingelegt, derart, daß der Ringkörper (35) durch die bezüglich des Nabenkörpers (39) ortsfest gehaltenen Blattfedern in Umfangsrichtung gegenüber Relativdrehung abgesichert ist und eine gerichtete Wärmedehnung in Radialrichtung erfolgt.

**Claims**

1. Shaft brake disc for disc brakes of rail vehicles, having an annular body (5; 35) constructed as an air-duct-free full disc or having ventilation ducts, which annular body carries two friction surfaces (29) which can be acted on on both sides by brake shoes (31) and which is screwed by means of axis-parallel screws (7; 49) to a hub body (3, 11; 39, 37) of a shaft (1; 47), the screws extending either freely through radial slots (9; 51) starting at the inner circumference of the annular body (5; 35) or in the form of through-screws through carrier ring portions or through spokes between the slots of the annular body, characterised in that in the region of the spokes lying between the slots (9; 51) the annular body (5; 35) has annular shoulders (23; 61) constructed on both sides on axial portions (21), and opposite these shoulders, radially outside on both sides of the annular body, annular shoulders (17; 63) of the hub body (3, 11; 39, 37) are located with a spacing, and in that the inner circumference of the annular body (5; 35) rests on a seat (33; 59) of the hub body (3, 11; 39, 37) in such a way that in the cold state of the annular body (5; 35) there is between the annular shoulders (23, 17; 61, 63) a radial spacing which can be taken up by heat expansion when the annular body (5; 35) heats up and the inner circumference of the annular body (5; 35) lifts from the seat (33; 59) with radial clearance during heat expansion.

**2.** Shaft brake disc according to claim 1, characterised in that one of the side portions of the hub body (3, 11) limiting the annular body (5) is formed by a clamping ring (11).

**3.** Shaft brake disc according to claim 1, characterised in that the two side portions of the hub body (39, 37) limiting the annular body (35) comprise clamping rings (37) held on the hub body in a form-fitting manner.

**4.** Shaft brake disc according to claim 3, characterised in that the clamping rings (37) on both sides of the annular body (35) abutting it under the tension of the screws (49) have on their inner circumference an axially inwardly directed inner collar (43) which engages into a groove (45) in the facing hub body (39).

**5.** Shaft brake disc according to one of the preceding claims, characterised by the following features:

a) on the inner circumference (carrier portion) of the annular body (35) slots (53), penetrating it in the axial direction, are provided;

b) slots (55), in radial alignment with these slots, extend through the hub body (39) located radially inwardly of the annular body (35);

c) the clamping rings (37), which can be clamped on both sides of the annular body (35) and the hub body (39) to these parts by means of the screws, are also respectively provided with a slot in the region of their inwardly directed inner collar (43), the slot being in alignment with the slots (53; 55) of the hub body and the annular body; and

d) a leaf spring (57) is inserted into each free region of the slot of the hub body and the annular body respectively, extending radially up to the inner circumference of the clamping rings, in such a way that the annular body (35) is secured, by means of the leaf springs which are fixedly held with respect to the hub body (39), in the circumferential direction against relative rotation, and a directed heat expansion occurs in the radial direction.

**Revendications**

**1.** Disque de frein d'arbre pour des freins à disques de véhicules sur rails, comportant un corps annulaire (5,35) réalisé sous la forme d'un disque plein dépourvu de canaux d'aération, ou comportant des canaux d'aération, lequel corps annulaire porte sur ses deux côtés des surfaces de friction (29) susceptibles d'être attaquées par deux mâchoires de frein (31) et est vissé, à l'aide de vis (7;49) parallèles à l'axe, à un corps de moyeu (3,11; 39,37) d'un arbre (1;47), les vis (7;49) s'étendant librement à travers des fentes radiales (9,51), issues de la périphérie intérieure du corps annulaire (5;35), ou s'étendant, sous la forme de boulons traversants, à travers des sections d'une bague de support ou de rayons, entre les fentes du corps annulaire, caractérisé par le fait que le corps annulaire (5,35) comporte, dans la zone des rayons situés entre les fentes (9,51) des épaulements annulaires (23;61) conformés sur les deux côtés de sections axiales (21) et en face desquels se situent à distance, de part et d'autre du corps annulaire et radicalement vers l'extérieur, des épaulements annulaires (17;63) du corps de moyeu (3,11; 39,371), et que la périphérie intérieure du corps annulaire (5;35) repose sur une portée (33;59) du corps de moyeu (3,11;39,37) de manière qu'à l'état froid du corps annulaire (5;35) il existe encore les épaulements annulaires (23,17 ; 61,63) un écart radial qui se résorbe, au chauffage du corps annulaire (5;35), par dilatation thermique et que la périphérie intérieure du corps annulaire (5;36) se détache, lors de la dilatation thermique, de la portée, avec un écart radial.

**2.** Disque de frein d'arbre selon la revendication 1, caractérisé par le fait que l'un des éléments latéraux du corps du moyeu (3,11) qui délimitent le corps annulaire(5) est constitué par un anneau de serrage (11)

**3.** Disque de frein d'arbre selon la revendication 1, caractérisé par le fait que les deux éléments latéraux du corps de moyeu (39,37) qui délimitent le corps annulaire, sont constitués par des anneaux de serrage associés par forme complémentaire au corps du moyeu

4. Disque de frein d'arbre selon la revendication 3, caractérisé par le fait que les deux anneaux de serrage (37) qui portent des deux côtés contre le corps annulaire (35), avec serrage dû aux vis, présentent chacun, sur leur périphérie intérieure, une collerette (43) dirigée radicalement vers l'intérieur et qui pénètrent dans une gorge (45) ménagée dans le corps du moyeu voisin (39)

5. Disque de frein d'arbre selon l'une quelconque des revendications précédentes caractérisé par les particularités suivantes :

a) sur la périphérie intérieure (section de support) du corps annulaire (35) sont prévues des fentes (53) qui traversent ce dernier dans le sens axial;

b) en alignement radial avec ces fentes s'étendent des fentes (55) à travers le corps du moyeu (39) qui se situe radicalement à l'intérieur du corps annulaire (35)

c) les anneaux de serrage (37) disposés de part et d'autre du corps annulaire (35) et du corps de moyeu (39) contre lequel ils sont serrés par les vis, sont munis, dans la zone de leur bourrelet dirigé vers l'intérieur, respectivement d'une fente en alignement avec les fentes (53; 55) du corps du moyeu et des corps annulaire; et

d) dans l'ouverture des fentes du corps de moyeu et du corps annulaire est introduite une lame de ressort (57) qui s'étend radialement jusqu'à la périphérie intérieure des anneaux de serrage, de façon que le corps annulaire soit empéché, par les lames de ressort qui sont maintenues fixe par rapport au corps du moyeu (39), contre toute rotation périphérique relative, et que soit assurée une dilatation thermique ciblée en direction radiale.

Fig.1

Fig. 2

Fig.3